# EUROPEAN PATENT SPECIFICATION

(11) **EP 4 258 456 B1**
(45) Date of publication and mention of the grant of the patent: **14.05.2025**
(21) Application number: 22876807.3
(22) Date of filing: 27.09.2022
(51) Int. Cl.: H01M 50/557, H01M 50/531, B65H 5/14, B25J 15/00, B25J 15/02, H01M 50/567, H01M 50/54

(54) **ELECTRODE LEAD GRIPPER**
ELEKTRODENLEITUNGSGREIFER
DISPOSITIF DE PRÉHENSION DE CÂBLE D'ÉLECTRODE

(30) Priority: 29.09.2021 KR 20210129232
(43) Date of publication of application: 11.10.2023
(73) Proprietor: LG Energy Solution, Ltd., Seoul 07335 (KR)
(72) Inventor: KWON, Myung Bin, Daejeon 34122 (KR)
(74) Representative: Plasseraud IP
(86) International application number: PCT/KR2022/014467
(87) International publication number: WO 2023/055035

(56) References cited:
- JP-U- H0 722 542
- KR-A- 20120 088 120
- KR-A- 20120 088 120
- KR-A- 20130 071 790
- KR-A- 20140 048 622
- KR-A- 20140 133 140
- KR-A- 20140 133 140
- KR-A- 20180 112 616

## Description

### [Technical Field]

The present invention relates to an electrode lead gripper.

### [Background Art]

Demand for high-efficiency secondary batteries is rapidly increasing in the fields of mobile devices and electric vehicles. Among such secondary batteries, lithium secondary batteries, which have high energy density, can maintain relatively high voltage, and have a low self-discharge rate, have been commercialized and widely used, and research and development for improving performance are being actively performed.

The lithium secondary batteries can be classified into a lithium ion battery that uses a liquid electrolyte, and a lithium ion polymer battery that uses a polymer solid electrolyte depending on the type of electrolyte.

In the case of the lithium ion battery that uses a liquid electrolyte, it may be usually used in the form in which a cylindrical or rectangular metal can is used as a container and is welded and sealed. Since the can-type secondary battery that uses such a metal can as a container has a fixed shape, it has the drawback of restricting the design of electronic products that uses it as a power source, and it is difficult to reduce the volume. Therefore, a pouch-type secondary battery has been developed and used in which both electrodes, a separation membrane, and an electrolyte are formed into a film, put in a pouch, and sealed.

The pouch-type secondary battery includes, as a basic structure, a battery case and an electrode assembly which are made up of a pouch or the like.

The electrode assembly includes a positive electrode plate, a negative electrode plate, and a separation membrane interposed between the positive electrode plate and the negative electrode plate to electrically insulate the positive electrode plate and the negative electrode plate.

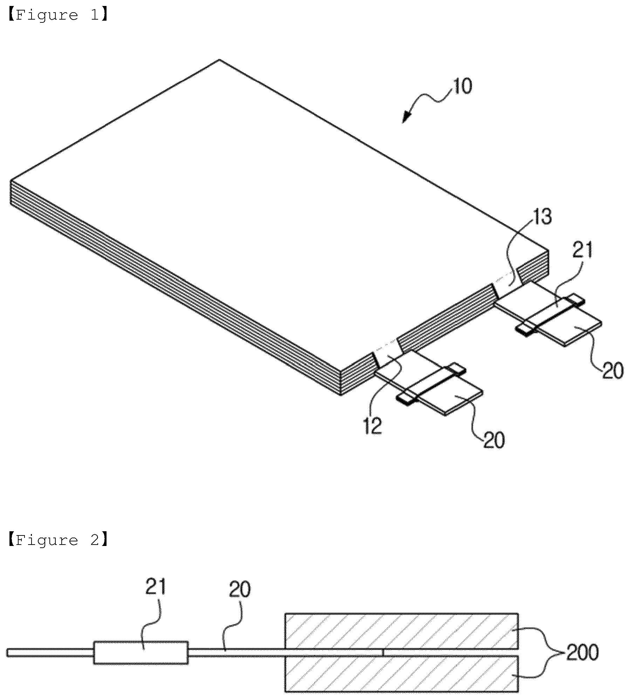

As shown in FIG. 1, in an electrode assembly 10, the positive elecrode plate is provided with an anode tab 12 provided on one or more regions of the positive electrode plate, and the negative electrode plate is provided with a negative electrode tab 13 provided on one or more regions of the negative electrode plate. After the one or more positive electrode tabs 12 and negative electrode tabs 13 converge in a certain direction, they are joined to the electrode lead 20 made of a conductive material by a method such as general resistance welding, ultrasonic welding, laser welding, and riveting. At this time, a sealing film 21 may be disposed around the electrode lead 20 to ensure an insulated state at a contact portion with the battery case and to increase the degree of sealing.

The electrode lead 20 connected and extending in this way performs a function corresponding to a predetermined electrode interface for electrically connecting the secondary battery and an external application device.

In order to bond the electrode lead 20 to the electrode tabs 12 and 13, the electrode lead 20 needs to be transported so as to be located above the electrode tabs 12 and 13. The electrode lead 20 is transported using a manner of gripping and transporting the electrode lead 20 by the gripper 200, and is a manner of applying pressure to the electrode lead 20 with the gripper 200 to fix the electrode lead 20 and transporting it to the electrode tabs 12 and 13 of the electrode assembly 10.

FIG. 2 is a side cross-sectional view showing that the gripper 210 grips the electrode lead 20 in the above-described conventional manner, and in which the electrode lead 20 having a flat surface is gripped using the gripper 200 having a flat grip surface.

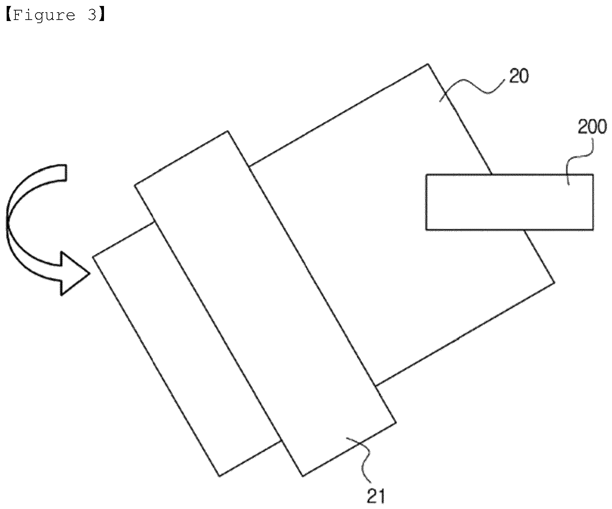

However, if the electrode lead 20 and the grip surface are flat as described above, when a change occurs in pressure or surface friction, a phenomenon in which the electrode lead 20 is twisted as shown in FIG. 3 may occur, which may cause dimensional defects in the battery.

Therefore, there is an emerging need for an electrode lead gripper that can solve the above problems.

JPH0722542 U discloses a transport hand suitable for transporting a lead frame.

### [Prior Art Document]

### [Patent Document]

Korean Patent Application No. 10-2014-0133140
Korean Patent Application No. 10-2012-0016905

### [Disclosure]

### [Technical Problem]

An object of the present invention is to provide an electrode lead gripper that can transport the electrode lead without twisting the electrode lead, even if pressure or friction changes, by fixing the electrode lead using a gripper.

### [Technical Solution]

In order to achieve the above purpose,
the present invention provides a lead gripper that grips and transports an electrode lead as recited in independent claim 1.

In an aspect of the present invention, the lead fixing protrusion may pass through the electrode lead and may be inserted into the groove which accommodates the lead fixing protrusion.

In an aspect of the present invention, the lead fixing protrusion may have a truncated conical shape or a truncated polygonal pyramid shape.

In an aspect of the present invention, the lead fixing protrusion may have the truncated conical shape.

In an aspect of the present invention, the two or more lead fixing protrusions may be included, and the two or more lead fixing protrusions may be located on the grip surface to be spaced apart from each other.

In an aspect of the present invention, the two or more lead fixing protrusions may be located in a horizontal direction or in a vertical direction on the basis of a tip of the arm.

In an aspect of the present invention, the lead gripper may include one to three pairs of arms.

In an aspect of the present invention, the lead fixing hole may have a circular or polygonal shape.

In an aspect of the present invention, the lead fixing hole may have a circular shape.

In an aspect of the present invention, the lead gripper may include a pair of arms,
the grip surface of any one of the upper arm or the lower arm may include two or more lead fixing protrusions that pass through the gripped electrode lead,
the two or more lead fixing protrusions may be located in the horizontal direction or in the vertical direction on the basis of the tip of the arm, and
the grip surface of the upper arm or the lower arm corresponding to the upper arm or the lower arm including the lead fixing protrusion may include a groove that accommodates the lead fixing protrusion.

In an aspect of the present invention, the lead gripper may include two or more pairs of arms,
the grip surface of any one of the upper arm or the lower arm in each pair of arms may include one or more lead fixing protrusions that pass through the gripped electrode lead, and
the grip surface of the upper arm or the lower arm corresponding to the upper arm or the lower arm including the lead fixing protrusion in each pair of arms may include a groove that accommodates the lead fixing protrusion.

### [Advantageous Effects]

Since the lead gripper of the present invention can fix the electrode lead by the lead fixing protrusion that passes through the electrode lead, it is possible to grip and transport the electrode lead without twisting the electrode lead even when pressure and friction change. This makes it possible to solve problems such as dimensional defects of the battery.

### [Description of Drawings]

FIG. 1 is a perspective view of an electrode assembly.
FIG. 2 is a side sectional view showing a status in which a conventional electrode lead gripper grips the electrode lead.
FIG. 3 is a plan view showing a lead twisting phenomenon that occurs in the conventional electrode lead transportation.
FIG. 4 is a side cross-sectional view of a lead gripper according to an embodiment of the present invention.
FIG. 5 is a front view of a lead gripper according to an embodiment of the present invention.
FIG. 6 is a plan view of the electrode lead gripped by the lead gripper according to an embodiment of the present invention.
FIG. 7 is a plan view of the electrode lead gripped by the lead gripper according to an embodiment of the present invention.
FIG. 8 is a plan view of the lead gripper that grips the electrode lead according to an embodiment of the present invention.
FIG. 9 is a plan view of the lead gripper that grips the electrode lead according to an embodiment of the present invention.

### [Detailed Description]

Hereinafter, the present invention will be described in detail based on the accompanying drawings so that a person having ordinary knowledge in the technical field to which the present invention belongs can easily carry it out. This invention may, however, be embodied in many different forms and is not limited to the embodiments set forth herein.

In order to clearly describe the present invention, parts irrelevant to the description have been omitted, and the same or similar components are denoted by the same reference numerals throughout the specification.

Furthermore, terms or words used in the specification and claims should not be construed as being limited to its customary or dictionary meaning, and should be interpreted by the inventors as a meaning and concept consistent with the technical idea of the present invention, based on the principle that the concepts of the terms can be properly defined to describe their invention in the best possible manner.

Embodiments will now be described in detail with reference to the accompanying drawings. This invention may, however, be embodied in many different forms and is not limited to the embodiments set forth herein.

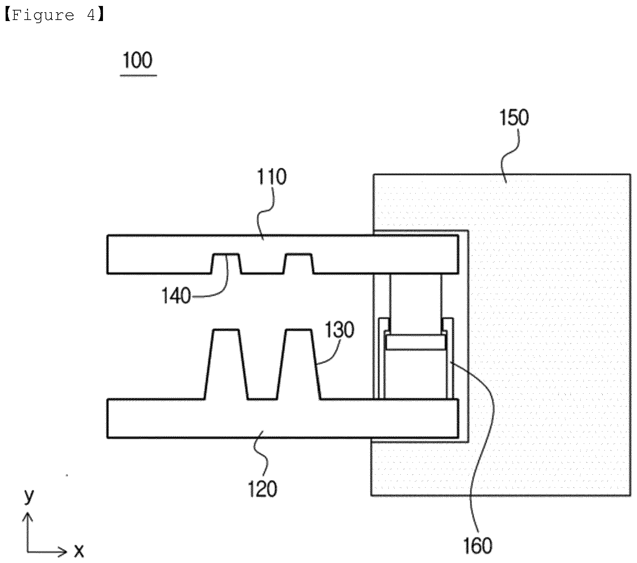

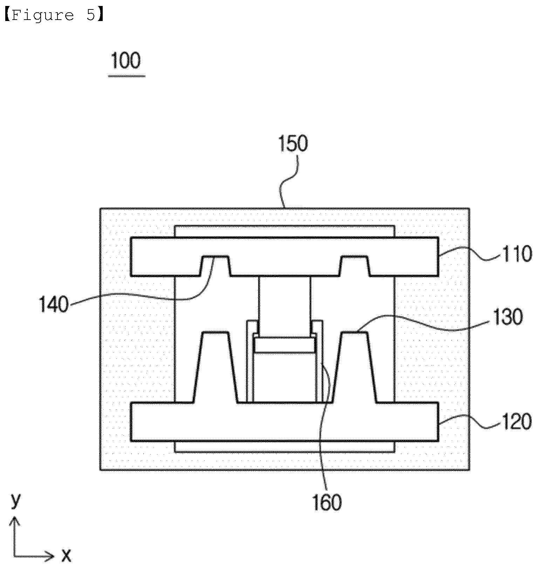

FIGS. 4 and 5 are side cross-sectional views that show a lead gripper according to an embodiment of the present invention.

Referring to FIGS. 4 and 5, a lead gripper 100 according to one embodiment of the present invention includes an upper arm 110 and a lower arm 120, and any one or more grip surfaces of the upper arm 110 and the lower arm 120 includes one or more lead fixing protrusions 130 that pass through the electrode lead to be gripped.

Also, the grip surface of the upper arm 110 or the lower arm 120 corresponding to the upper arm 110 or the lower arm 120 including the lead fixing protrusion 130 includes grooves 140 that accommodate the lead fixing protrusion 130.

In the lead gripper 100 of the present invention, other configurations except for the structure of the gripper 100 can be configured in the same manner as lead grippers commonly used in this field. That is, as shown in FIG. 4, rear end portions of the upper arm 110 and the lower arm 120 can be coupled to a lead gripper body 150. At this time, the lead gripper body 150 may include an arm moving member 160 that moves one or more of the upper arm 110 and the lower arm 120 to enable gripping. The arm moving member 160 can be driven by known driving means, for example, hydraulic driving means, mechanical driving means, or the like.

In the lead gripper 100 of the present invention, the lead fixing protrusion 130 can be inserted through the electrode lead into the groove 140 that accommodates the lead fixing protrusion 130. That is, the upper end portion of the lead fixing protrusion 130 can be inserted into the groove 140 that accommodate the lead fixing protrusion, while penetrating the electrode lead.

For example, when the lower arm 120 includes the lead fixing protrusion 130, and the upper arm 110 includes the groove 140 for accommodating the lead fixing protrusion 130, the electrode lead can be grasped by fitting engagement in which the lower arm 120 moves upward so that the lead fixing protrusion 130 passes through the electrode lead, and the upper arm 110 moves downward to insert the penetrated lead fixing protrusion 130 into the groove 140. Also, the electrode lead grip can be released by moving the lower arm 120 downward and moving the upper arm 110 upward to release the fitting engagement.

Due to the fitting engagement, the electrode lead can be transported to the electrode tab of the electrode assembly without being twisted.

The lead fixing protrusion 130 may have a truncated conical shape or a truncated polygonal pyramid shape.

If the lead fixing protrusion 130 has a truncated polygonal pyramid shape, since the lead is less likely to be twisted due to the polygonal shape, one or more lead fixing protrusions 130 may be included on the grip surface of the upper arm 110 or the lower arm 120.

In addition, when the lead fixing protrusion 130 has a truncated conical shape, since the penetrated lead fixing protrusion 130 is easily twisted, two or more lead fixing protrusions 130 may be included on the grip surface of the upper arm 110 or the lower arm 120.

Preferably, two or more lead fixing protrusions 130 may be included on the grip surface of the upper arm 110 or the lower arm 120, and the two or more lead fixing protrusions may be spaced apart from each other on the grip surface.

FIG. 4 is a diagram showing that the two or more lead fixing protrusions 130 are located in a horizontal direction x on the basis of the tip of the arm, and FIG. 5 shows that the two or more lead fixing protrusions 130 are located in a vertical direction y.

The lead gripper 100 may include one to three pairs of arms.

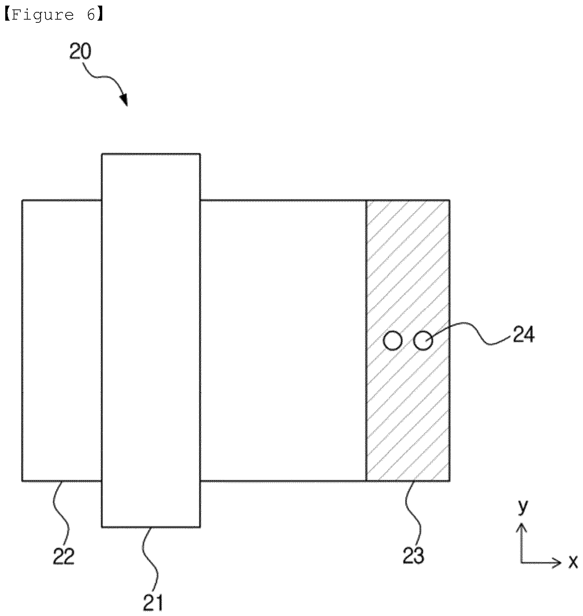

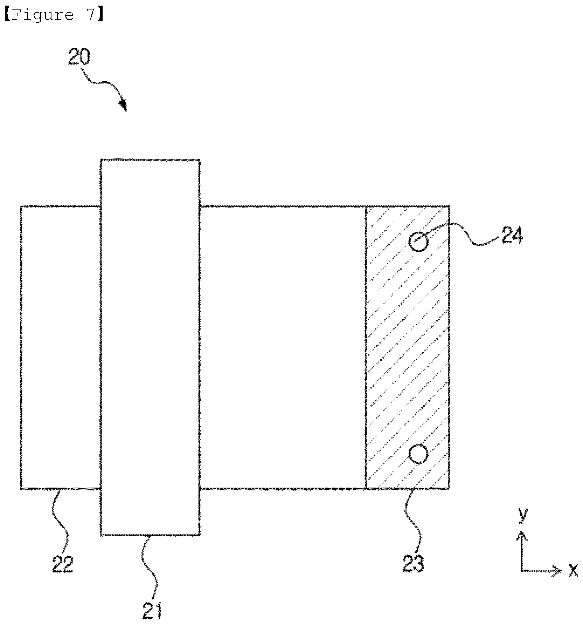

FIGS. 6 and 7 are plan views showing the electrode lead 20 that is gripped by the lead gripper 100 according to an embodiment of the present invention.

In order for the lead fixing protrusion 130 of the lead gripper 100 to pass through the electrode lead 20, the electrode lead 20 includes a lead fixing hole 24 through which the lead fixing protrusion 130 can pass. Specifically, one or more lead fixing holes 24 may be included.

Referring to FIGS. 6 and 7, the electrode lead 20 includes a joint portion 22 joined with the electrode tab, and one or more lead fixing holes 24 at one end portion, and a sealing film 21 can be placed around the electrode lead 20.

The grip of the electrode lead 20 can be performed by making the lead fixing protrusion 130 pass through the lead fixing hole 24 formed in the electrode lead, and by inserting the lead fixing protrusion 130 having passed through the lead fixing hole 24 into the groove 140 that accommodates the lead fixing protrusion.

For example, when the lower arm 120 includes the lead fixing protrusion 130 and the upper arm 110 includes the groove 140 that accommodates the lead fixing protrusion 130, the electrode lead 20 can be gripped by the fitting engagement in which the lower arm 120 moves upward to allow the lead fixing protrusion 130 to pass through the lead fixing hole 24 of the electrode lead 20, and the upper arm 110 moves downward to insert the lead fixing protrusion 130 having passed through the lead fixing hole 24 into the groove 140. Further, the grip of the electrode lead 20 can be released, by moving the lower arm 120 downward and moving the upper arm 110 upward to release the fitting engagement.

After the electrode lead 20 is gripped, it may be transported such that the joint portion 22 of the gripped electrode lead can be located above the electrode tab. After the transportation is completed and the grip of the electrode lead 20 is released, since the lead fixing hole 24 of the electrode lead 20 is no longer needed, it is possible to perform a step of cutting one end portion of the electrode lead 20 at which the lead fixing hole 24 is located. Cutting can be performed along a cut surface 23 of the electrode lead 20.

The lead fixing hole 24 may have a circular or polygonal shape, and the shape of the lead fixing hole 24 can be determined depending on the shape of the lead fixing protrusion 130. Preferably, lead fixing hole 24 may have a circular shape.

Also, the lead fixing holes 24 may be included in the same number as the lead fixing protrusions 130, and two or more lead fixing holes 24 may be located at one end portion of the electrode lead 20 to be separated from each other.

FIG. 6 is a diagram showing that the two or more lead fixing holes 24 are located in the horizontal direction x on the basis of the tip of the electrode lead 20, and FIG. 7 is a diagram showing that the two or more lead fixing holes 24 are located in the vertical direction y.

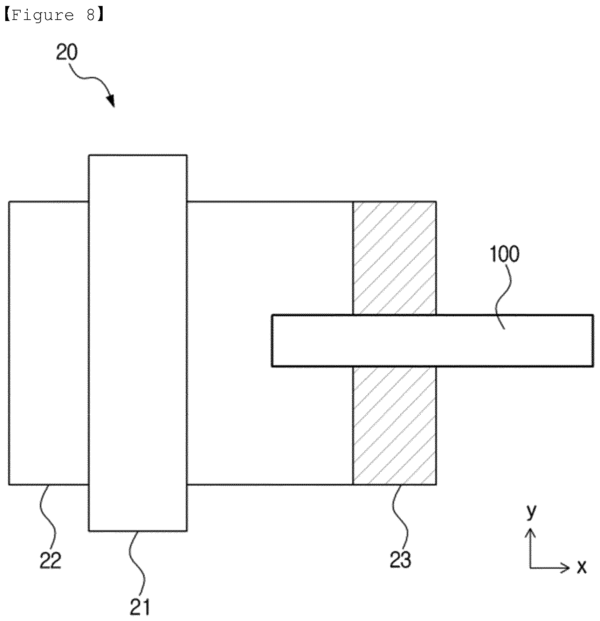

FIG. 8 shows that the lead gripper 100 according to one embodiment of the present invention grips the electrode lead 20.

Referring to FIG. 8, the lead gripper 100 according to an embodiment of the present invention can include a pair of arms. Additionally, the grip surface of one of the upper arm 110 or the lower arm 120 can include two or more lead fixing protrusions 130 that pass through the gripped electrode lead 20. The two or more lead fixing protrusions 130 may be located in the horizontal direction x or in the vertical direction y on the basis of the tip of the arm. Also, a groove 140 that accommodates the lead fixing protrusion 130 can be included on the grip surface of the upper arm 110 or the lower arm 120 corresponding to the upper arm 110 or the lower arm 120 including the lead fixing protrusion 130.

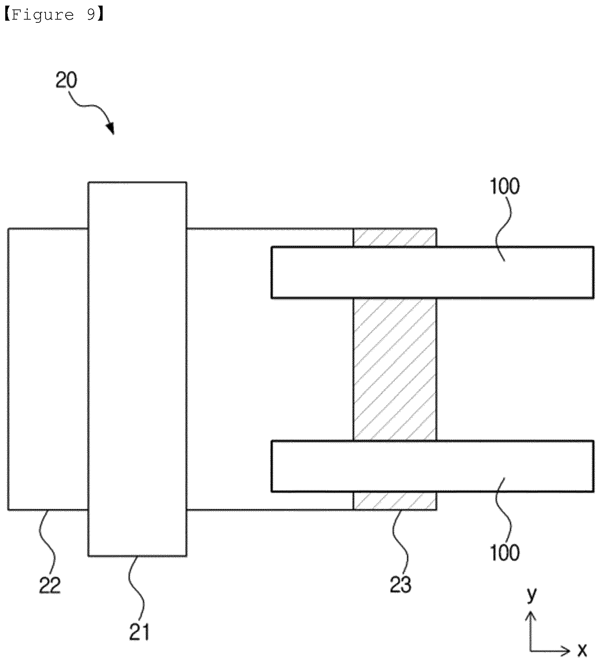

FIG. 9 shows a lead gripper 100 according to an embodiment of the present invention.

Referring to FIG. 9, a lead gripper 100 according to one embodiment of the present invention can include two pairs of arms. The grip surface of either upper arm 110 or lower arm 120 in each pair of arms can include one or more lead fixing protrusions 130 that pass through the electrode lead 20 being gripped. At this time, the grip surface of the upper arm 110 or the lower arm 120 corresponding to the upper arm 110 or the lower arm 120 including the lead fixing protrusion 130 in each pair of arms may include a groove 140 that accommodates the lead fixing protrusion.

### [Description of symbols]

10: Electrode assembly, 12: Positive electrode tab
13: Negative electrode tab 20: Electrode lead
21: Sealing film, 22: Joint portion
23: Cut surface, 24: Lead fixing hole
100, 200: Lead gripper, 110: Upper arm
120: Lower arm, 130: Lead fixing protrusion
140: Groove, 150: Lead gripper body
160: Arm moving member
23: Cut surface, 24: Lead fixing hole
100, 200: Lead gripper, 110: Upper arm
120: Lower arm, 130: Lead fixing protrusion
140: Groove, 150: Lead gripper body
160: Arm moving member

## Claims

1. A lead gripper (100,200) that is configured to grip and transport an electrode lead (20),
wherein the lead gripper (100,200) comprises an upper arm (110) and a lower arm (120),
wherein one or more grip surfaces of any one of the upper arm (110) and the lower arm (120) comprise one or more lead fixing protrusions (130) that are configured to
pass through one or more lead fixing holes (24) in the electrode lead to be gripped; and
**characterized in that** a grip surface of the upper arm (110) or the lower arm (120) corresponding to the upper arm (110) or the lower arm (120) comprising the lead fixing protrusion (130) comprises a groove (140) which is configured to accommodate the lead fixing protrusion (130).

2. The lead gripper (100,200) according to claim 1,
wherein the lead fixing protrusion (130) is configured to pass through the electrode lead and is configured to be inserted into the groove (140) which is configured to accommodate the lead fixing protrusion (130).

3. The lead gripper (100,200) according to claim 1,
wherein the lead fixing protrusion (130) has a truncated conical shape or a truncated polygonal pyramid shape.

4. The lead gripper (100,200) according to claim 3,
wherein the lead fixing protrusion (130) has a truncated conical shape.

5. The lead gripper (100,200) according to claim 1,
wherein two or more lead fixing protrusions (130) are comprised, and
the two or more lead fixing protrusions (130) are located on the grip surface to be spaced apart from each other.

6. The lead gripper (100,200) according to claim 5,
wherein the two or more lead fixing protrusions (130) are located in a horizontal direction or in a vertical direction on the basis of a tip of arm.

7. The lead gripper (100,200) according to claim 1,
wherein the lead gripper (100, 200) comprises one to three pairs of arms.

8. A system comprising a lead gripper (100,200) and an electrode lead (20) according to claim 1,
wherein the lead fixing hole has a circular or polygonal shape.

9. The system according to claim 8,
wherein the lead fixing hole has a circular shape.

10. The lead gripper (100,200) according to claim 1,
wherein the lead gripper (100, 200) comprises a pair of arms,
a grip surface of any one of the upper arm (110) or the lower arm (120) comprises two or more lead fixing protrusions (130) that are configured to pass through the gripped electrode lead (20),
the two or more lead fixing protrusions (130) are located in a horizontal direction or in a vertical direction on the basis of the tip of the arm, and
a grip surface of an upper arm (110) or a lower arm (120) corresponding to an upper arm (110) or a lower arm (120) comprising the lead fixing protrusion (130) comprises a groove (140) that is configured to accommodate the lead fixing protrusion (130).

11. The lead gripper (100,200) according to claim 1,
wherein the lead gripper (100,200) comprises two or more pairs of arms,
a grip surface of any one of an upper arm (110) or a lower arm (120) in each pair of arms comprises one or more lead fixing protrusions (130) that are configured to pass through the gripped electrode lead (20), and
a grip surface of an upper arm (110) or a lower arm (120) corresponding to an upper arm (110) or a lower arm (120) comprising the lead fixing protrusion (130) in each pair of arms comprises a groove (140) that is configured to accommodate the lead fixing protrusion (130).

## Patentansprüche

1. Leitungsgreifer (100, 200), welcher dazu eingerichtet ist, eine Elektrodenleitung (20) zu greifen und zu transportieren,
wobei der Leitungsgreifer (100, 200) einen oberen Arm (110) und einen unteren Arm (120) umfasst,
wobei eine oder mehrere Greifflächen eines beliebigen des oberen Arms (110) und des unteren Arms (120) einen oder mehrere Leitungsfixiervorsprünge (130) umfassen, die dazu eingerichtet sind, durch ein oder mehrere Leitungsfixierlöcher (24) in der zu greifenden Elektrodenleitung hindurchzutreten; und
**dadurch gekennzeichnet, dass** eine Greiffläche des oberen Arms (110) oder des unteren Arms (120), entsprechend dem oberen Arm (110) oder dem unteren Arm (120), der den Leitungsfixiervorsprung (130) umfasst, eine Nut (140) umfasst, welche dazu eingerichtet ist, den Leitungsfixiervorsprung (130) aufzunehmen.

2. Leitungsgreifer (100, 200) nach Anspruch 1,
wobei der Leitungsfixiervorsprung (130) dazu eingerichtet ist, durch die Elektrodenleitung hindurchzutreten, und dazu eingerichtet ist, in die Nut (140) eingeführt zu werden, welche dazu eingerichtet ist, den Leitungsfixiervorsprung (130) aufzunehmen.

3. Leitungsgreifer (100, 200) nach Anspruch 1,
wobei der Leitungsfixiervorsprung (130) eine Kegelstumpfform oder eine polygonale Pyramidenstumpfform aufweist.

4. Leitungsgreifer (100, 200) nach Anspruch 3, wobei der Leitungsfixiervorsprung (130) eine Kegelstumpfform aufweist.

5. Leitungsgreifer (100, 200) nach Anspruch 1,
wobei zwei oder mehrere Leitungsfixiervorsprünge (130) umfasst sind, und
die zwei oder mehrere Leitungsfixiervorsprünge (130) auf der Greiffläche so angeordnet sind, dass sie voneinander beabstandet sind.

6. Leitungsgreifer (100, 200) nach Anspruch 5,
wobei die zwei oder mehrere Leitungsfixiervorsprünge (130) in einer horizontalen Richtung oder in einer vertikalen Richtung auf der Basis einer Armspitze angeordnet sind.

7. Leitungsgreifer (100, 200) nach Anspruch 1,
wobei der Leitungsgreifer (100, 200) ein bis drei Paare von Armen umfasst.

8. System umfassend einen Leitungsgreifer (100, 200) und eine Elektrodenleitung (20) nach Anspruch 1,
wobei das Leitungsfixierloch eine kreisförmige oder polygonale Form aufweist.

9. System nach Anspruch 8,
wobei das Leitungsfixierloch eine kreisförmige Form aufweist.

10. Leitungsgreifer (100, 200) nach Anspruch 1,
wobei der Leitungsgreifer (100, 200) ein Paar von Armen umfasst,
eine Greiffläche eines beliebigen des oberen Arms (110) oder des unteren Arms (120) zwei oder mehrere Leitungsfixiervorsprünge (130) umfasst, die dazu eingerichtet sind, durch die gegriffene Elektrodenleitung (20) hindurchzutreten,
die zwei oder mehreren Leitungsfixiervorsprünge (130) in einer horizontalen Richtung oder in einer vertikalen Richtung auf der Basis der Spitze des Arms angeordnet sind, und
eine Greiffläche eines oberen Arms (110) oder eines unteren Arms (120), entsprechend einem oberen Arm (110) oder einem unteren Arm (120), der den Leitungsfixiervorsprung (130) umfasst, eine Nut (140) umfasst, welche dazu eingerichtet ist, den Leitungsfixiervorsprung (130) aufzunehmen.

11. Leitungsgreifer (100, 200) nach Anspruch 1,
wobei der Leitungsgreifer (100, 200) zwei oder mehrere Paare von Armen umfasst,
eine Greiffläche eines beliebigen eines oberen Arms (110) oder eines unteren Arms (120) in jedem Paar von Armen einen oder mehrere Leitungsfixiervorsprünge (130) umfasst, die dazu eingerichtet sind, durch die gegriffene Elektrodenleitung (20) hindurchzutreten, und
eine Greiffläche eines oberen Arms (110) oder eines unteren Arms (120), entsprechend einem oberen Arm (110) oder einem unteren Arm (120), der den Leitungsfixiervorsprung (130) in jedem Paar von Armen umfasst, eine Nut (140) umfasst, welche dazu eingerichtet ist, den Leitungsfixiervorsprung (130) aufzunehmen.

## Revendications

1. Pince pour fil (100, 200) qui est configurée pour saisir et transporter un fil d'électrode (20),
dans laquelle la pince pour fil (100, 200) comprend un bras supérieur (110) et un bras inférieur (120),
dans laquelle une ou plusieurs surfaces de préhension de l'un quelconque du bras supérieur (110) et du bras inférieur (120) comprennent une ou plusieurs saillies de fixation de fil (130) qui sont configurées pour passer à travers un ou plusieurs trous de fixation de fil (24) dans le fil d'électrode à saisir ; et
**caractérisée en ce qu'**une surface de préhension du bras supérieur (110) ou du bras inférieur (120) correspondant au bras supérieur (110) ou au bras inférieur (120) comprenant la saillie de fixation de fil (130) comprend une rainure (140) qui est configurée pour accueillir la saillie de fixation de fil (130).

2. Pince pour fil (100, 200) selon la revendication 1, dans laquelle la saillie de fixation de fil (130) est configurée pour passer à travers le fil d'électrode et est configurée pour être insérée dans la rainure (140) qui est configurée pour accueillir la saillie de fixation de fil (130).

3. Pince pour fil (100, 200) selon la revendication 1,
dans laquelle la saillie de fixation de fil (130) présente une forme tronconique ou une forme de pyramide polygonale tronquée.

4. Pince pour fil (100, 200) selon la revendication 3,
dans laquelle la saillie de fixation de fil (130) présente une forme tronconique.

5. Pince pour fil (100, 200) selon la revendication 1,
dans laquelle deux saillies de fixation de fil (130) ou plus sont comprises, et
les deux saillies de fixation de fil (130) ou plus sont situées sur la surface de préhension pour être écartées l'une de l'autre.

6. Pince pour fil (100, 200) selon la revendication 5,
dans laquelle les deux saillies de fixation de fil (130) ou plus sont situées dans une direction horizontale ou dans une direction verticale sur la base d'une extrémité de bras.

7. Pince pour fil (100, 200) selon la revendication 1,
dans laquelle la pince pour fil (100, 200) comprend une à trois paires de bras.

8. Système comprenant une pince pour fil (100, 200) et un fil d'électrode (20) selon la revendication 1,
dans lequel le trou de fixation de fil présente une forme circulaire ou polygonale.

9. Système selon la revendication 8,
dans lequel le trou de fixation de fil présente une forme circulaire.

10. Pince pour fil (100, 200) selon la revendication 1,
dans laquelle la pince pour fil (100, 200) comprend une paire de bras,
une surface de préhension de l'un quelconque du bras supérieur (110) ou du bras inférieur (120) comprend deux saillies de fixation de fil (130) ou plus qui sont configurées pour passer à travers le fil d'électrode (20) saisi,
les deux saillies de fixation de fil (130) ou plus sont situées dans une direction horizontale ou dans une direction verticale sur la base de l'extrémité du bras, et
une surface de préhension d'un bras supérieur (110) ou d'un bras inférieur (120) correspondant à un bras supérieur (110) ou à un bras inférieur (120) comprenant la saillie de fixation de fil (130) comprend une rainure (140) qui est configurée pour accueillir la saillie de fixation de fil (130).

11. Pince pour fil (100, 200) selon la revendication 1,
dans laquelle la pince pour fil (100, 200) comprend deux paires de bras ou plus,
une surface de préhension de l'un quelconque d'un bras supérieur (110) ou d'un bras inférieur (120) dans chaque paire de bras comprend une ou plusieurs saillies de fixation de fil (130) qui sont configurées pour passer à travers le fil d'électrode (20) saisi, et
une surface de préhension d'un bras supérieur (110) ou d'un bras inférieur (120) correspondant à un bras supérieur (110) ou à un bras inférieur (120) comprenant la saillie de fixation de fil (130) dans chaque paire de bras comprend une rainure (140) qui est configurée pour accueillir la saillie de fixation de fil (130).
